# EUROPEAN PATENT APPLICATION

(11) **EP 4 465 374 A1**
(43) Date of publication of application: **20.11.2024**
(21) Application number: 24165129.8
(22) Date of filing: 21.03.2024
(51) Int. Cl.: H01M 4/04

(54) **LITHIUM-ION LIQUID BATTERY, ELECTRODE SHEET THEREOF, AND METHOD OF MANUFACTURING ELECTRODE SHEET**

(30) Priority: 27.03.2023 TW 112111578
(71) Applicant: Hon Hai Precision Industry Co., Ltd., 236038 New Taipei City (TW)
(72) Inventor: WU, Yi-Tsuo, 236038 New Taipei City (TW)
(74) Representative: Mewburn Ellis LLP

(57) **Abstract**

This disclosure provides a manufacturing method of an electrode sheet of a lithium-ion liquid battery. An electrode powder is formed from an active material by a dry mixing process. A current collecting metal sheet is disposed in a mold. The electrode powder is introduced into a cavity of the mold on opposite sides of the current collecting metal sheet. A thermal compression process using the mold is performed to form a first and a second electrode layer from the electrode powder, where the two electrode layers are respectively attached to a first and a second surface of the current collecting metal sheet. When a positive electrode sheet is manufactured, densities of the electrode layers are in a range of 1.6 g/cm³ to 3.4 g/cm³. When a negative electrode sheet is manufactured, densities of the electrode layers are in a range of 1.2 g/cm³ to 2.1 g/cm³.

## Description

### BACKGROUND

### Field of Invention

The present disclosure relates to the lithium-ion liquid battery. More particularly, the present disclosure relates to the electrode sheet of the lithium-ion liquid battery and its manufacturing method.

### Description of Related Art

An electrode sheet of the lithium-ion liquid battery includes a current collector and an active material layer disposed on the surface of the current collector. In recent manufacturing process of the battery electrode sheet, a solvent is generally added for preparing the active material slurry, where the active material slurry is later treated with, for example, drying process and pressing process after being coated onto the current collector to form the electrode sheet. However, the solvent and the apparatus of the following processes, such as solvent recycler, oven, roller, etc., usually consume much space and manufacturing cost. In addition, it is challenging to precisely control the thickness of the active material layer by the coating-drying-pressing process, which makes it difficult to improve the yield of the electrode sheet.

### SUMMARY

According to one embodiment of the present disclosure, a method of manufacturing an electrode sheet of a lithium-ion liquid battery includes the following steps. An electrode powder is formed from an active material by a dry mixing process. A current collecting metal sheet is disposed in a mold. The electrode powder is introduced into a cavity of the mold on opposite sides of the current collecting metal sheet. A thermal compression process is performed by using the mold to form a first electrode layer and a second electrode layer from the electrode powder, where the first electrode layer and the second electrode layer are respectively attached to a first surface and a second surface opposite to the first surface of the current collecting metal sheet. A density of the first electrode layer and a density of the second electrode layer respectively depend on a mass of the electrode powder introduced into the mold. The density of the first electrode layer and the density of the second electrode layer satisfy: (a) respectively in a range of 1.6 g/cm³ to 3.4 g/cm³ when manufacturing a positive electrode sheet; or (b) respectively in a range of 1.2 g/cm³ to 2.1 g/cm³ when manufacturing a negative electrode sheet.

According to one embodiment of the present disclosure, an electrode sheet of a lithium-ion liquid battery includes a current collecting metal sheet, a first electrode layer on a first surface of the current collecting metal sheet, and a second electrode layer on a second surface of the current collecting metal sheet, where the second surface is opposite to the first surface. The first electrode layer and the second electrode layer are formed by a thermal compression process performed with a mold. A density of the first electrode layer and a density of the second electrode layer satisfy: (a) respectively in a range of 1.6 g/cm³ to 3.4 g/cm³ when the first electrode layer and the second electrode layer acts as a positive electrode; or (b) respectively in a range of 1.2g/cm³ to 2.1 g/cm³ when the first electrode layer and the second electrode layer act as a negative electrode.

According to one embodiment of the present disclosure, a lithium-ion liquid battery includes a positive electrode sheet and a negative electrode sheet, where at least one of the positive electrode sheet and the negative electrode sheet is the above-mentioned electrode sheet. The lithium-ion liquid battery also includes an isolation film positioned between the positive electrode sheet and the negative electrode sheet, and an electrolyte filling in a space around the isolation film, the positive electrode sheet and negative electrode sheet, where the electrolyte infiltrate into the first electrode layer and the second electrode layer.

According to the above-mentioned embodiments, the electrode sheet of the lithium-ion liquid battery of the present disclosure is formed by attaching the electrode layer into the opposite surfaces of the current collecting metal sheet by using the mold of the thermal compression process. Since the electrode powder distribution on the current collecting metal sheet may be controlled by the mold and the mass of the electrode powder introduced into the mold, the thermal compression process with the mold has good control on the structure of the electrode layer and reduces the process tolerance of the electrode sheet.

### BRIEF DESCRIPTION OF THE DRAWINGS

Aspects of the present disclosure are best understood from the following detailed description when read with the accompanying figures.
Fig. 1 illustrates a schematic perspective view of a lithium-ion liquid battery according to some embodiments of the present disclosure.
Fig. 2 illustrates a cross-sectional view of an electrode sheet of a lithium-ion liquid battery according to some embodiments of the present disclosure.
Figs. 3A-3D illustrate cross-sectional views of various intermediate stages of a manufacturing process of the electrode sheet according to one embodiment of the present disclosure.
Figs. 4A-4D illustrate cross-sectional views of various intermediate stages of a manufacturing process of the electrode sheet according to another embodiment of the present disclosure.

### DETAILED DESCRIPTION

The present disclosure provides an electrode sheet of a lithium-ion liquid battery and its manufacturing method. The manufacturing process of the electrode sheet includes performing a thermal compression process on the electrode powder on the current collecting metal sheet by using a mold to form the electrode layers attached to the opposite surfaces of the current collecting metal sheet. The electrode powder distribution on the current collecting metal sheet may be controlled by the mold and the electrode powder mass in the mold, such that the thermal compression process with the mold has good control on the structure of the electrode layer and reduces the process tolerance of the electrode sheet.

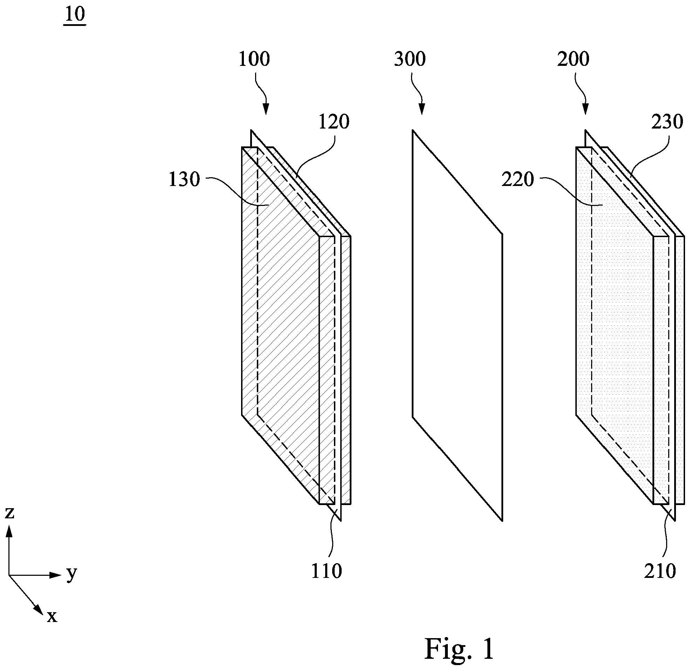

According to some embodiments of the present disclosure, Fig. 1 illustrates a schematic perspective view of a lithium-ion liquid battery 10. Referring to Fig. 1, the lithium-ion liquid battery 10 includes an electrode sheet 100, an electrode sheet 200, and electrolyte (not shown). The electrode sheet 100 and the electrode sheet 200 in the lithium-ion liquid battery 10 may be separately disposed along the Y-axis direction. In some embodiments, the electrode sheet 100 may act as a positive electrode sheet of the lithium-ion liquid battery 10 while the electrode sheet 200 may act as a negative electrode sheet, or vice versa in some other embodiments. The electrolyte fills the space around the electrode sheet 100 and the electrode sheet 200, so that the electrolyte infiltrates into the electrode sheet 100 and the electrode sheet 200. The lithium ions may transfer between the electrode sheet 100 and the electrode sheet 200 through the electrolyte, thereby providing the discharging/charging function of the lithium-ion liquid battery 10. In some embodiments, the lithium-ion liquid battery 10 may further include an isolation film 300 positioned between the electrode sheet 100 and the electrode sheet 200 to isolate the electrode sheet 100 from the electrode sheet 200 and control the ion transfer between the electrode sheet 100 and the electrode sheet 200.

Specifically, the electrode sheet 100 may include a current collecting metal sheet 110, a first electrode layer 120, and a second electrode layer 130. The current collecting metal sheet 110 is sandwiched by the first electrode layer 120 and the second electrode layer 130, so that the first electrode layer 120 and the second electrode layer 130 are respectively positioned on the opposite surfaces of the current collecting metal sheet 110 in the Y-axis direction. Similarly, the electrode sheet 200 may include a current collecting metal sheet 210, a third electrode layer 220, and a fourth electrode layer 230, where the third electrode layer 220 and the fourth electrode layer 230 are respectively positioned on the opposite surfaces of the current collecting metal sheet 210 in the Y-axis direction. As shown in Fig. 1, the first electrode layer 120 of the electrode sheet 100 may face toward the third electrode layer 220 of the electrode sheet 200 along the Y-axis direction.

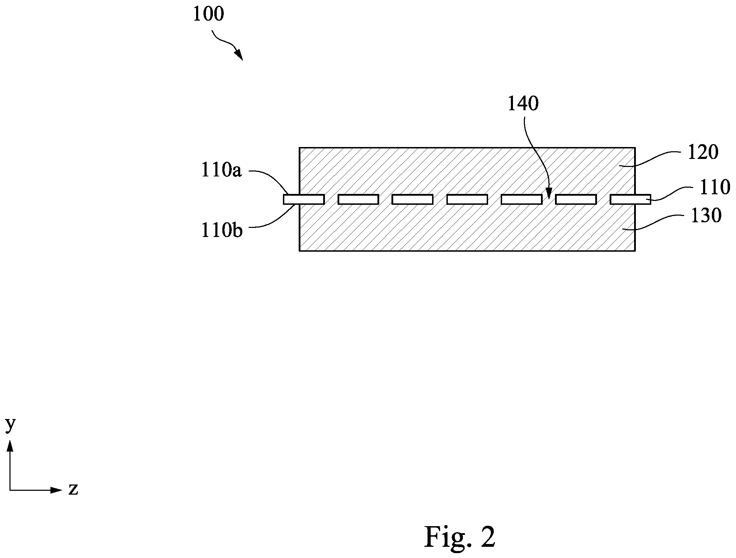

According to some embodiments of the present disclosure, Fig. 2 illustrates a cross-sectional view of the electrode sheet 100 in Fig. 1 in the Y-Z plane to further illustrate the structure of the electrode sheet 100 of the lithium-ion liquid battery 10. It should be noted that the following description related to Fig. 2 can be applied to the electrode sheet 100 of the lithium-ion liquid battery 10 in Fig. 1, applied to the electrode sheet 200 or simultaneously applied to both electrode sheet 100 and electrode sheet 200.

Referring to Fig. 2, the first electrode layer 120 is attached to a first surface 110a of the current collecting metal sheet 110, and the second electrode layer 130 is attached to a second surface 110b opposite to the first surface 110a. As a result, the first electrode layer 120 and the second electrode layer 130 directly contact the surfaces of the current collecting metal sheet 110. The first electrode layer 120 and the second electrode layer 130 may be conformally attached onto the current collecting metal sheet 110, so that the top surfaces of the first electrode layer 120 and the second electrode layer 130 are respectively parallel to the first surface 110a and the second surface 110b of the current collecting metal sheet 110.

Furthermore, the current collecting metal sheet 110 may include multiple channels 140 extending from the first surface 110a to the second surface 110b. In other words, the channels 140 penetrate through the current collecting metal sheet 110, so that the sidewalls of the channels 140 connect the first surface 110a and the second surface 110b. In such embodiments, the material of the first electrode layer 120 and the second electrode layer 130 may fill the channels 140, leading to the first electrode layer 120 and the second electrode layer 130 directly contacting to each other through the channels 140.

Since the first electrode layer 120 directly contacts the second electrode layer 130 through the channels 140, the electrolyte may infiltrate the entire electrode sheet 100 so fast that the yield of the lithium-ion liquid battery 10 is increased and the processing time is reduced. Taking the process of the lithium-ion liquid battery 10 in Fig. 1 as an example, the electrolyte may fill the space along the Z-axis direction to infiltrate the electrode sheet 100. When the electrolyte contacts the electrode sheet 100, the electrolyte may infiltrate from the surfaces of the first electrode layer 120 and the second electrode layer 130 and further infiltrate along the channels 140 in the direction (i.e., the Y-axis direction) vertical to the surfaces of the electrode sheet 100 to accelerate the infiltration of the electrolyte into the electrode sheet 100. In other words, the channels 140 and the first electrode layer 120/second electrode layer 130 positioned on the two ends of the channels 140 improves efficiency and completeness of infiltration of the electrolyte into the electrode sheet 100.

In some embodiments, the first electrode layer 120 and the second electrode layer 130 may be formed by the same material, so that an unobvious interface or even no interface exists between the first electrode layer 120 and the second electrode layer 130 in the channels 140. In such embodiments, the first electrode layer 120 and the second electrode layer 130 may be fixed on the opposite surfaces of the current collecting metal sheet 110, thereby increasing the structural stability of the electrode sheet 100.

In some embodiments, the first electrode layer 120 and the second electrode layer 130 may be symmetrically arranged on the first surface 110a and the second surface 110b, so that the first electrode layer 120 and the second electrode layer 130 have levelled sidewalls in the Y-Z plane. As shown in Fig. 2, the first electrode layer 120 and the second electrode layer 130 may have a same thickness in the Y-axis direction.

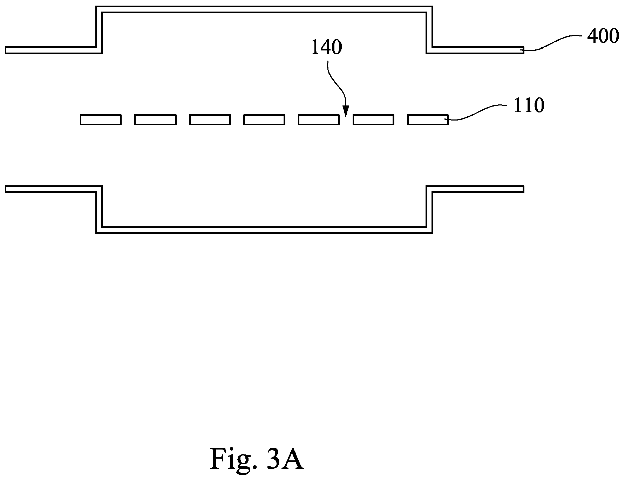

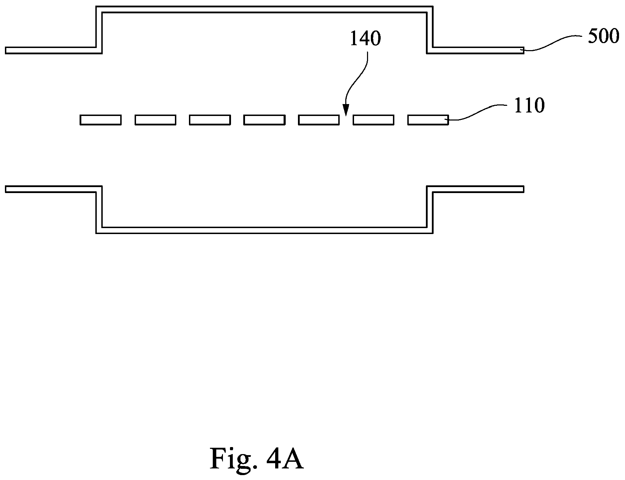

According to one embodiment of the present disclosure, Figs. 3A-3D illustrate cross-sectional views of various intermediate stages of a manufacturing process of the electrode sheet 100. According to another embodiment of the present disclosure, Figs. 4A-4D illustrate cross-sectional views of various intermediate stages of a manufacturing process of the electrode sheet 100. The embodiments illustrated in Figs. 3A-3D and Figs. 4A-4D are both manufacturing processes of the electrode sheet 100 related to a thermal compression process by using a mold, but the operation details of the two embodiments are different, which will be further discussed in the following content.

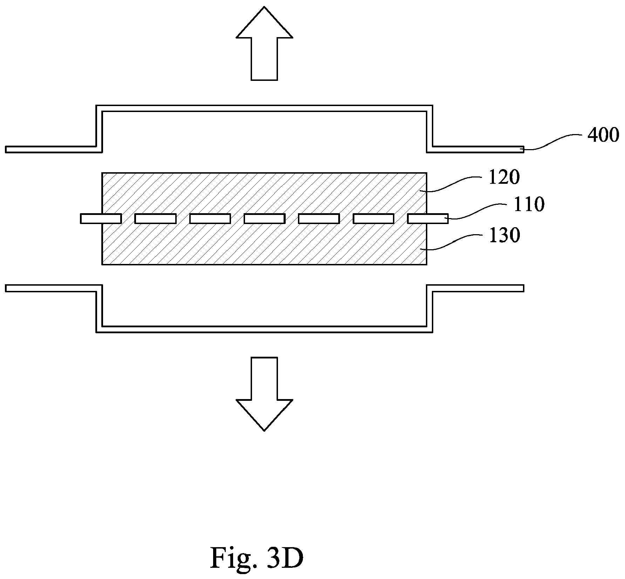

Referring to Fig. 3A, a current collecting metal sheet 110 is provided and disposed into a mold 400. Specifically, a part of the mold 400 is above the current collecting metal sheet 110, while another part of mold 400 is below the current collecting metal sheet 110. The parts of the mold 400 positioned on opposite sides of the current collecting metal sheet 110 form a cavity corresponding to the shape and the dimension of the later formed electrode layer, where the electrode layer (for example, the first electrode layer 120 and the second electrode layer 130 in Fig. 3D) will be formed on the surfaces of the current collecting metal sheet 110. For example, the parts of the mold 400 having the same dimension may be arranged on opposite sides of the current collecting metal sheet 110 to form the two electrode layers having the same thickness.

In some embodiments, before disposing the current collecting metal sheet 110 into the mold 400, a punching process may first be performed on the current collecting metal sheet 110 to form the channels 140 in the current collecting metal sheet 110, in which the channels 140 penetrate through the current collecting metal sheet 110 and connect the opposite surfaces of the current collecting metal sheet 110. The widths of the channels 140 may be same as or different from each other. Each channel 140 may have a straight structure, an inclined structure, a converging structure or a diverging structure in a cross-sectional view. In addition, the channels 140 may have a cylinder shape, a right prism shape, or an oblique prism shape.

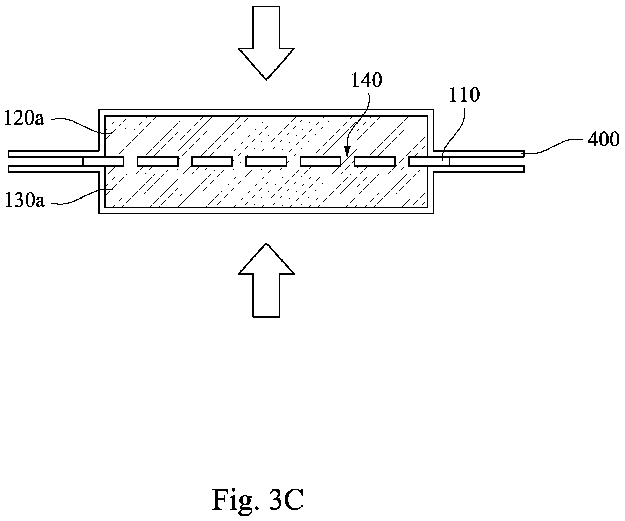

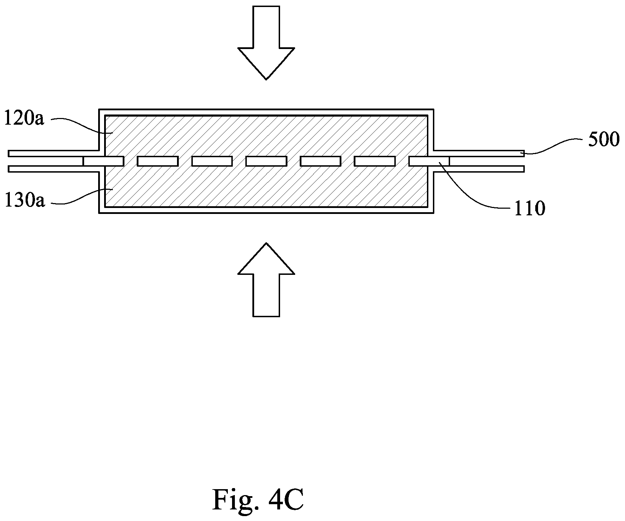

In some embodiments, the dimension and the amount of the channels 140 in the current collecting metal sheet 110 may be appropriate, so that the later formed electrode powder fill the channels 140 in the thermal compression process (as shown in Fig. 3C or Fig. 4C). For example, the channels 140 may occupy 10% to 90% of the surface area in the X-Z plane of the current collecting metal sheet 110. If the surface area occupied by the channels 140 is smaller than 10%, it may become too difficult to fill the channels 140 with the electrode powder by the thermal compression process, which reduces the efficiency of the electrolyte infiltration. If the surface area occupied by the channels 140 is greater than 90%, the current collecting and current conducting of the current collecting metal sheet 110 may be impacted.

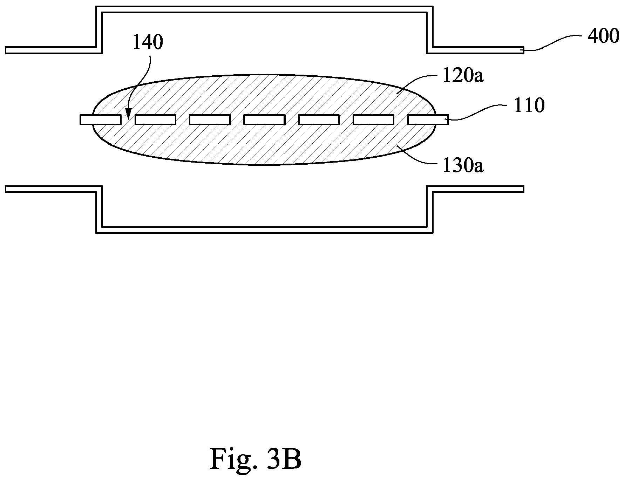

Referring to Fig. 3B, an electrode powder 120a and an electrode powder 130a are introduced into the cavity of the mold 400, where the electrode powder 120a and the electrode powder 130a are positioned on opposite sides of the current collecting metal sheet 110. The electrode powder 120a and the electrode powder 130a respectively corresponds to the later formed first electrode layer 120 and second electrode layer 130 (as shown Fig. 3D).

In some embodiments, the electrode powder 120a and the electrode powder 130a may include similar or the same composition and may be formed by a dry mixing process. For example, the dry mixing process of the electrode powder 120a and the electrode powder 130a may include uniformly mixing an active material, a conductive powder and a dry adhesive under a solvent-free condition, where the mixing step is followed by a granulation process to form the electrode powder 120a and the electrode powder 130a. Since the electrode powder 120a and the electrode powder 130a are formed under a solvent-free condition, the electrode layer later may be formed on the current collecting metal sheet 110 without performing a solvent removing process, such as baking.

In some embodiments, the active material, conductive powder and dry adhesive included in the electrode powder 120a and the electrode powder 130a may be uniformly mixed under a solvent-free condition, and the compositions may be shaped and attached to the current collecting metal sheet 110 in the following thermal compression process (as shown in Fig. 3C or Fig. 4C). For example, the electrode powder 120a and the electrode powder 130a having the mentioned compositions may have a viscosity lower than 10000 mPa·s after the granulation process, such that the electrode powders can form the electrode layers corresponding to the mold in the following thermal compression process.

In some embodiments which the electrode sheet 100 acts as a positive electrode sheet, the active material may include lithium iron phosphate, lithium cobaltate, lithium manganate, lithium-containing transition metal oxide, sodium-containing transition metal oxide, or a combination thereof. In some embodiments which the electrode sheet 100 acts as a negative electrode sheet, the active material may include lithium metal, lithium alloy, silicon-based material, carbon-containing material, lithium titanate, or a combination thereof. In some embodiments which the electrode sheet 100 acts as either one of the positive electrode sheet or the negative electrode sheet, the conductive powder may be carbon powder, carbon nanotube, polyvinylidene difluoride (PVDF) or a combination thereof. The dry adhesive may be thermal softening polymers or low-melting-point metal, such as tin, where the dry adhesive may show stronger adhesion after being heated to higher than 50°C.

Referring to Fig. 3C, the mold 400 is closed to perform the thermal compression process on the electrode powder 120a and the electrode powder 130a by using the mold 400. Specifically, the mold 400 is closed toward the current collecting metal sheet 110 to press and heat up the electrode powder 120a and the electrode powder 130a in the mold 400. Due to the pressure and the heat applied to the electrode powder 120a and the electrode powder 130a by the mold 400, the internal adhesion in the electrode powder 120a and the electrode powder 130a is increased, as well as the adhesion at the interface between the electrode powders and the current collecting metal sheet 110. Therefore, the electrode powder 120a and the electrode powder 130a may be respectively attached to the opposite surfaces of the current collecting metal sheet 110.

In some embodiments which the channels 140 are first formed in the current collecting metal sheet 110, the electrode powder 120a and the electrode powder 130a are also pressed into the channels 140 by the thermal compression process. As a result, the electrode powder 120a and the electrode powder 130a fill the channels 140 after the thermal compression process, such that the electrode powder 120a and the electrode powder 130a on opposite surfaces of the current collecting metal sheet 110 may directly contact each other.

In the embodiments illustrated in Fig. 3B to Fig. 3C, after the electrode powder 120a and the electrode powder 130a are introduced into the mold 400, the mold 400 is closed to shape the electrode powder 120a and the electrode powder 130a. Such thermal compression process may be referred as a die casting process. For example, the die casting process may shape the electrode powder 120a and the electrode powder 130a on opposite sides of the current collecting metal sheet 110 by using the mold 400, and then fixing the electrode powder 120a and the electrode powder 130a by thermal compression with a pressure higher than 1.5 standard atmospheres and a temperature in a range of 50°C to 300°C.

Referring to Fig. 3D, the mold 400 is opened and released to obtain the electrode sheet 100. After releasing the mold 400, the electrode powder 120a becomes the first electrode layer 120 attached to one surface of the current collecting metal sheet 110, and the electrode powder 130a becomes the second electrode layer 130 attached to the other surface of the current collecting metal sheet 110.

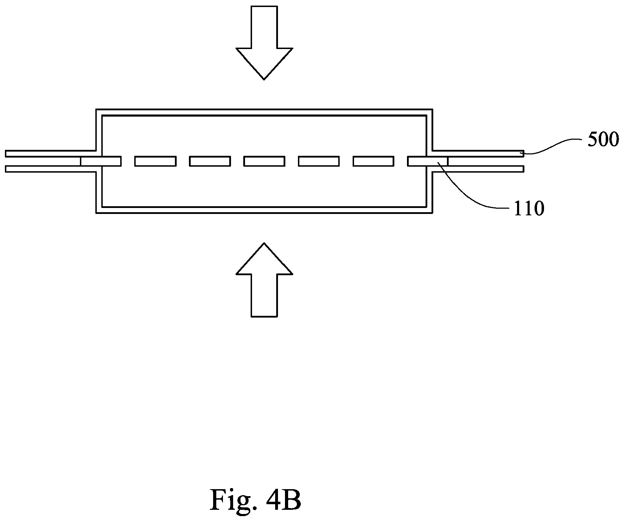

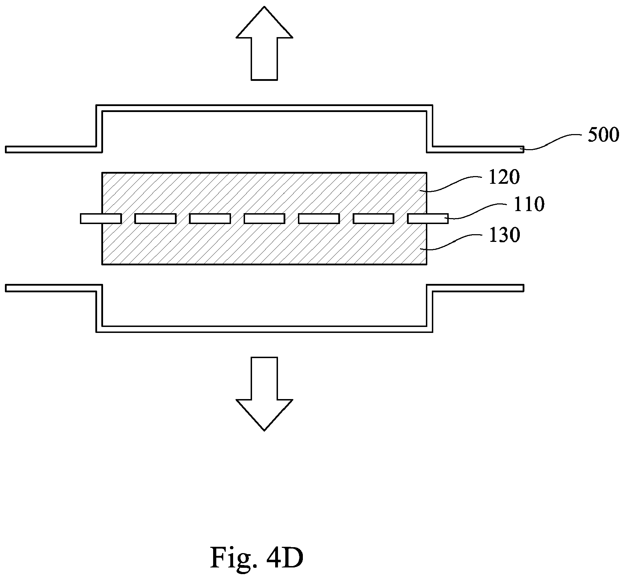

The electrode sheet manufacturing process illustrated in Figs. 4A-4D is similar to that of Figs. 3A-3D, but they are not the same process. Specifically, the operations illustrated in Fig. 4A and Fig. 4D are similar to those of Fig. 3A and Fig. 3D, but the thermal compression operations illustrated in Fig. 4B and Fig. 4C are different from those of Fig. 3B and Fig. 3C.

Referring to Fig. 4A, a current collecting metal sheet 110 is provided and disposed into a mold 500, where the mold 500 has a cavity corresponding to the shape and the dimension of the later formed electrode layer (for example, the first electrode layer 120 and the second electrode layer 130 in Fig. 4D). In some embodiments, before disposing the current collecting metal sheet 110 into the mold 500, a punching process may be first performed on the current collecting metal sheet 110 to form multiple channels 140 in the current collecting metal sheet 110.

Referring to Fig .4B, the mold 500 is closed. After the mold 500 is closed, the current collecting metal sheet 110 is fixed in the mold 500, and the space between the mold 500 and the current collecting metal sheet 110 corresponds to the later formed electrode layers.

Referring to Fig. 4C, the electrode powder 120a and the electrode powder 130a are introduced into the cavity of the mold 500, and a thermal compression process is performed on the electrode powder 120a and the electrode powder 130a on opposite sides of the current collecting metal sheet 110. Specifically, the electrode powder 120a and the electrode powder 130a are introduced into the mold 500 from the feeding inlet and fill the space in the mold 500. During the filling of the mold 500 by the electrode powder 120a and the electrode powder 130a, the mold 500 maintains closed as the mold 500 presses and heats up the electrode powder 120a and the electrode powder 130a in the mold 500. Due to the pressure and the heat applied to the electrode powder 120a and the electrode powder 130a by the mold 500, the internal adhesion in the electrode powder 120a and the electrode powder 130a is increased, as well as the adhesion at the interface between the electrode powders and the current collecting metal sheet 110. Therefore, the electrode powder 120a and the electrode powder 130a may be respectively attached to the opposite surfaces of the current collecting metal sheet 110.

In some embodiments which the current collecting metal sheet 110 includes the channels 140, as the electrode powder 120a and the electrode powder 130a fill the mold 500, the electrode powder 120a and the electrode powder 130a may fill the channels 140 due to the pressing by the mold 500. Therefore, the electrode powder 120a and the electrode powder 130a on opposite surfaces of the current collecting metal sheet 110 may directly contact each other after the thermal compression process.

In the embodiments illustrated in Fig. 4B to Fig. 4C, before the electrode powder 120a and the electrode powder 130a are introduced into the mold 500, the mold 500 is closed to provide the filling space of the electrode powder 120a and the electrode powder 130a. Such thermal compression process may be referred as an injection molding process. For example, as the electrode powder 120a and the electrode powder 130a fill the mold 500, the injection molding process may fix the electrode powder 120a and the electrode powder 130a by thermal compression with a pressure higher than 1.5 standard atmospheres and a temperature in a range of 50°C to 300°C.

Referring to Fig. 4D, the mold 500 is opened and released to obtain the electrode sheet 100. After releasing the mold 500, the electrode powder 120a becomes the first electrode layer 120 attached to one surface of the current collecting metal sheet 110, and the electrode powder 130a becomes the second electrode layer 130 attached to the other surface of the current collecting metal sheet 110.

In the embodiments illustrated in Figs. 3A-3D and Figs. 4A-4D related to the electrode sheet manufacturing process, the electrode sheet 100 is formed by the thermal compression process by using a mold, such as the mold 400 and the mold 500. The amount, dimension, shape, and other parameters of the electrode powder on the current collecting metal sheet 110 may be defined by the cavity of the mold and the introduced amount of the electrode powder (i.e., the mass of the electrode powder 120a and the electrode powder 130a entering the mold 400 and the mold 500). Since the mold has a fixed shape and dimension while the introduced amount of the electrode powder is easily controlled, the electrode layers of the electrode sheet 100 may be formed with a precise structure.

Specifically, as shown in Figs. 3A-3D and Figs. 4A-4D, the closed mold 400 and mold 500 provide a fixed filling space for the electrode powder 120a and the electrode powder 130a, such that the densities of the first electrode layer 120 and the second electrode layer 130 may depend on the mass of the electrode powder 120a and electrode powder 130a introduced into the mold 400 and the mold 500. For example, when manufacturing a positive electrode sheet, the densities of the first electrode layer 120 and the second electrode layer 130 may be respectively in a range of 1.6 g/cm³ to 3.4 g/cm³; when manufacturing a negative electrode sheet, the densities of the first electrode layer 120 and the second electrode layer 130 may be respectively in a range of 1.2 g/cm³ to 2.1 g/cm³.

In addition, the thicknesses of the first electrode layer 120 and the second electrode layer 130 may depend on the cavity of the mold 400 and the mold 500, which allows controlling the thickness tolerance of the electrode layers in a range of ±2%. Specifically, a tolerance of the thickness of the first electrode layer 120 in the direction vertical to the surface of the current collecting metal sheet 110 may be within ±2% of a target thickness of the first electrode layer 120 designed for the electrode sheet manufacturing process. Similarly, a tolerance of the thickness of the second electrode layer 130 may be controlled within ±2% of a target thickness of the second electrode layer 130.

For example, if the target thickness of the first electrode layer 120 is 100 micrometers, the thickness of the first electrode layer 120 formed by the above-mentioned electrode sheet manufacturing process may be in a range of 98 micrometers to 102 micrometers. In some preferred embodiments, the thickness of the formed first electrode layer 120 may be in a range of 99 micrometers to 101 micrometers.

In addition to defining the thickness of the electrode layer, the mold of the thermal compression process may also provide a high surface flatness of the electrode sheet by the contact surface between the mold and the electrode powder. For example, in some embodiments, the contact surface between the mold 400/mold 500 and the electrode powder 120a may be so smooth that the surface flatness of the first electrode layer 120 is within ±3% of the target thickness of the first electrode layer 120. In other words, the thermal compression process using the mold may improve the conformality of the electrode layer and the current collecting metal sheet.

In addition, through the thermal compression process using the mold, the electrode powders are attached to the surfaces of the current collecting metal sheet by pressing and heating. Therefore, the electrode sheet may be manufactured under a solvent-free condition, which omits the solvent removing process, such as baking, and reduces the space for apparatus and the manufacturing cost for manufacturing the electrode sheet. Since the electrode sheet manufacturing process is performed without a solvent removing operation, the density of the electrode powder on the current collecting metal sheet may be maintained after the thermal compression process. In some embodiments, due to the controlling by the mold space and the introduced amount of the electrode powder, the electrode layer may be formed with a high density by the thermal compression process using the mold without additional rolling operation. For example, after the thermal compression process with the mold 400 or the mold 500, the space density of the first electrode layer 120 may reach up to more than 50% of the theoretic density of the electrode layer itself.

In the embodiments illustrated in Figs. 3A-4D, the thermal compression process of die casting and injection molding are respectively shown, but other thermal compression process using a mold is also suitable for forming the electrode sheet 100. In a lithium-ion liquid battery (for example, the lithium-ion liquid battery 10 shown in Fig. 1), at least one of the electrode sheet (for example, one of the electrode sheet 100 or the electrode sheet 200 in Fig. 1 or both of them) is formed by the thermal compression process using a mold, such as a die casting process, an injection molding process or the like.

According to the embodiments of the present disclosure, the electrode sheet of the lithium-ion liquid battery includes the current collecting metal sheet and the electrode layers on opposite surfaces of the current collecting metal sheet, where the electrode layers are attached to the surfaces of the current collecting metal sheet by the thermal compression process using the mold. The mold may easily control the electrode powder distribution on the current collecting metal sheet, thereby reducing the tolerance of the electrode layer structure. The thermal compression process with the mold also allows using the electrode powder under a solvent-free condition, which omits the post processing operations, such as solvent removing. In addition, the channels in the current collecting metal sheet may be filled with the electrode layer by the thermal compression process, thereby improving the efficiency and completeness of the electrolyte infiltrating the electrode sheet in the lithium-ion liquid battery.

## Claims

1. A method of manufacturing an electrode sheet (100) of a lithium-ion liquid battery (10) being **characterized by** comprising:
forming an electrode powder (120a, 130a) from an active material by a dry mixing process;
disposing a current collecting metal sheet (110) in a mold (400);
introducing the electrode powder (120a, 130a) into a cavity of the mold (400) on opposite sides of the current collecting metal sheet (110); and
performing a thermal compression process by using the mold (400) to form a first electrode layer (120) and a second electrode layer (130) from the electrode powder (120a, 130a), wherein the first electrode layer (120) and the second electrode layer (130) are respectively attached to a first surface (110a) and a second surface (110b) of the current collecting metal sheet (110), the second surface (110b) is opposite to the first surface (110a);
wherein a density of the first electrode layer (120) and a density of the second electrode layer (130) depend on a mass of the electrode powder (120a, 130a) introduced into the mold (400), and wherein the density of the first electrode layer (120) and the density of the second electrode layer (130) satisfy:
(a) respectively in a range of 1.6 g/cm³ to 3.4 g/cm³ when manufacturing a positive electrode sheet; or
(b) respectively in a range of 1.2 g/cm³ to 2.1 g/cm³ when manufacturing a negative electrode sheet.

2. The method of claim 1, wherein a thickness of the first electrode layer (120) and the second electrode layer (130) depend on the cavity of the mold (400), and wherein a tolerance of the thickness of the first electrode layer (120) and the second electrode layer (130) is within ±2% of a target thickness of the first electrode layer (120) and the second electrode layer (130).

3. The method of anyone of claims 1-2, wherein the step of performing the thermal compression process comprises using a die casting process, and wherein the die casting process comprises closing the mold (400) after introducing the electrode powder (120a, 130a) into the cavity of the mold (400).

4. The method of anyone of claims 1-2, wherein the step of performing the thermal compression process comprises using an injection molding process, and wherein the injection molding process comprises closing the mold (400) before introducing the electrode powder (120a, 130a) into the cavity of the mold (400).

5. The method of anyone of claims 1-4, further comprising:
before the step of disposing the current collecting metal sheet (110) in the mold (400), performing a punching process on the current collecting metal sheet (110) to form a plurality of channels (140) in the current collecting metal sheet (110), wherein the channels (140) extend from the first surface (110a) to the second surface (110b).

6. The method of claim 5, wherein after the step of performing the thermal compression process, the first electrode layer (120) directly contacts the second electrode layer (130) through the channels (140) in the current collecting metal sheet (110).

7. The method of anyone of claims 1-6, wherein the dry mixing process comprises:
uniformly mixing the active material, a conductive powder and a dry adhesive under a solvent-free condition followed by a granulation process to form the electrode powder (120a, 130a).

8. The method of claim 7, wherein the electrode powder (120a, 130a) after the granulation process has a viscosity lower than 10000 mPa s.

9. An electrode sheet (100) of a lithium-ion liquid battery (10) being **characterized by** comprising:
a current collecting metal sheet (110);
a first electrode layer (120) on a first surface (110a) of the current collecting metal sheet (110); and
a second electrode layer (130) on a second surface (110b) of the current collecting metal sheet (110), wherein the second surface (110b) is opposite to the first surface (110a),
wherein the first electrode layer (120) and the second electrode layer (130) are formed by a thermal compression process performed with a mold (400),
wherein a density of the first electrode layer (120) and a density of the second electrode layer (130) satisfy:
(a) respectively in a range of 1.6 g/cm³ to 3.4 g/cm³ when the first electrode layer and the second electrode layer act as a positive electrode; or
(b) respectively in a range of 1.2 g/cm³ to 2.1 g/cm³ when the first electrode layer and the second electrode layer act as a negative electrode.

10. The electrode sheet of claim 9, wherein the current collecting metal sheet (110) comprises a plurality of channels (140) extending from the first surface (110a) to the second surface (110b), the first electrode layer (120) directly contacts the second electrode layer (130) through the channels (140), and wherein widths of the channels (140) are same as or different from each other.

11. The electrode sheet of claim 10, wherein the channels (140) occupy 10% to 90% of a surface area of the current collecting metal sheet (110).

12. The electrode sheet of anyone of claims 9-11, wherein a top surface of the first electrode layer (120) is parallel to the first surface (110a) of the current collecting metal sheet (110).

13. The electrode sheet of anyone of claims 9-12, wherein a tolerance of a thickness of the first electrode layer (120) in a direction vertical to the first surface (110a) of the current collecting metal sheet (110) is within ±2% of a target thickness of the first electrode layer (120).

14. The electrode sheet of claim 13, wherein a surface flatness of the first electrode layer (120) is within ±3% of the target thickness of the first electrode layer (120).

15. A lithium-ion liquid battery (10), comprising:
a positive electrode sheet (100) and a negative electrode sheet (200), wherein at least one of the positive electrode sheet (100) and the negative electrode sheet (200) is the electrode sheet of claim 9;
an isolation film (300) positioned between the positive electrode sheet (100) and the negative electrode sheet (200); and
an electrolyte filling in a space around the isolation film (300), the positive electrode sheet (100) and the negative electrode sheet (200), wherein the electrolyte infiltrate into the first electrode layer (120) and the second electrode layer (130).
